# EUROPÄISCHE PATENTSCHRIFT

(11) **EP 3 895 279 B1**
(45) Veröffentlichungstag und Bekanntmachung des Hinweises auf die Patenterteilung: **17.12.2025**
(21) Anmeldenummer: 20701307.9
(22) Anmeldetag: 17.01.2020
(51) Int. Cl.: H02K 1/04, H02K 15/02, H02K 15/12, B32B 37/00, B32B 37/12, C08G 59/40, C08G 59/68, C09D 163/00, H01F 3/02, H01F 41/02

(54) **BLECH FÜR DIE HERSTELLUNG EINES BLECHPAKETS, INSBESONDERE EINES STATORPAKETS ODER EINES ROTORPAKETS, SOWIE VERFAHREN ZUR HERSTELLUNG EINES BLECHPAKETS**
SHEET FOR PRODUCING A LAMINATED CORE, IN PARTICULAR A STATOR ASSEMBLY OR A ROTOR ASSEMBLY, AND METHOD FOR PRODUCING A LAMINATED CORE
TÔLE POUR LA PRODUCTION D'UN PAQUET DE TÔLES, EN PARTICULIER UN ENSEMBLE STATOR OU UN ENSEMBLE ROTOR, ET PROCÉDÉ DE PRODUCTION D'UN PAQUET DE TÔLES

(30) Priorität: 20.05.2019 DE 102019113291
(43) Veröffentlichungstag der Anmeldung: 20.10.2021
(73) Patentinhaber: ThyssenKrupp Steel Europe AG, 47166 Duisburg (DE)
(72) Erfinder: LEWE, Tobias, 48147 Münster (DE); MACHALITZA, Karsten, 45473 Mülheim an der Ruhr (DE); HERGET, Florian, 44803 Bochum (DE); TIETZ, Marco, 40489 Düsseldorf (DE); KAMEN, Volker, 44653 Herne (DE); BEJM, Aleksandra, 44269 Dortmund (DE); WIETHOFF, Christian, 45768 Marl (DE)
(74) Vertreter: Zenz Patentanwälte Partnerschaft mbB
(86) Internationale Anmeldenummer: PCT/EP2020/051177
(87) Internationale Veröffentlichungsnummer: WO 2020/233841

(56) Entgegenhaltungen:
- GB-A- 1 293 142
- JP-A- 2017 079 945
- US-A- 4 591 529
- US-A1- 2007 231 463
- US-A1- 2012 156 441
- US-A1- 2016 053 045
- US-A1- 2016 203 897
- US-A1- 2018 265 757
- US-B1- 6 278 021

## Beschreibung

Die vorliegende Erfindung betrifft ein Blech für die Herstellung eines Statorpakets oder eines Rotorpakets. Die Erfindung betrifft außerdem ein Verfahren zur Herstellung eines Blechpakets, insbesondere eines Statorpakets oder eines Rotorpakets für eine elektrische Maschine, insbesondere für einen Elektromotor.

Die Funktionsweise von elektrischen Maschinen unterschiedlicher Weise, und im Besonderen von Elektromotoren, ist seit langem bekannt. Nicht zuletzt vor dem Hintergrund der zunehmenden Verwendung von Elektromotoren im individualisierten Personenkraftverkehr, oft auch unter dem Schlagwort der Elektromobilität angesprochen, gewinnt der Elektromotor weiter an Bedeutung. Wesentliche Bestandteile jedes Elektromotors sind ein Stator und ein Rotor, wobei der Begriff des Stators einen feststehenden Teil des Motors bezeichnet und der Begriff des Rotors einen sich bewegenden Teil des Motors bezeichnet.

Eine Herausforderung bei Bereitstellung von Elektromotoren ist, die Effizienz des Elektromotors, beispielsweise die bereitgestellte Leistung pro Volumen und/oder den Wirkungsgrad, im Rahmen eines wirtschaftlich sinnvollen Aufwands zu erhöhen.

Ein Konzept zur Bereitstellung von effizienten Elektromotoren ist die Herstellung von Statoren und/oder Rotoren oder von Teilen der Statoren und/oder Rotoren als sogenanntes Statorpaket beziehungsweise Rotorpaket. Hierbei werden die genannten Bauteile als Blechpakete, auch als Lamellenpakete bezeichnet, aus einzelnen sogenannten Lamellen zusammengesetzt. Der Begriff der Lamelle bezeichnet ein Formteil, welches aus einem Elektroblech oder einem Elektroband ausgenommen wurde, beispielsweise mittels Stanzen. Die Lamellenpakete bestehen aus einer Vielzahl von dünnen Lamellen, die miteinander gestapelt und gegeneinander, bereichsweise oder bevorzugt vollständig, voneinander elektrisch isoliert sind. Für derartige Zwecke ist aus der Praxis beispielsweise die Nutzung sogenannter Elektroisolierlacke bekannt, die in sogenannte Isolierklassen eingeordnet sind.

Die Herstellung eines derartigen Blechpakets umfasst stets die Schritte der Herstellung von Lamellen sowie der Verbindung der Lamellen miteinander. Die Verbindung wird dabei bevorzugt in einer Weise vorgenommen, dass die Lamellen nach dem Verbinden abschnittsweise, bevorzugt vollständig, elektrisch voneinander isoliert sind, das heißt bevorzugt: dass zwei benachbarte Lamellen keine galvanische Verbindung zueinander haben.

Die Herstellung der einzelnen Lamellen kann beispielsweise durch Stanzen erfolgen. Das Verbinden der gestanzten Lamellen zu einem Blechpaket kann durch eine Vielzahl bekannter Verfahren erfolgen, beispielsweise durch Verschrauben, durch Anlegen von Klammern, durch Verschweißen oder durch Stanzpaketieren. Jedes dieser genannten, dem Fachmann geläufigen, Herstellverfahren geht jedoch aufgrund der während der Verbindungsherstellung erzeugten mechanischen Einwirkung mit nachteiligem Einfluss auf die nach dem Verbinden vorherrschenden elektromagnetischen Eigenschaften des fertiggestellten Blechpakets einher. Insbesondere können mechanische Spannungen, die bei einer nach dem Stand der Technik hergestellten Verbindung zwangsläufig zumindest in gewissem Maße unvermeidlich sind, sich nachteilig auf die magnetischen Eigenschaften und den Verlauf von Magnetfeldlinien innerhalb des Blechpakets auswirken, woraus sich beispielsweise unmittelbar ein nachteiliger Einfluss auf die Effizienz eines daraus hergestellten Elektromotors ergibt. Eine bei einigen Verbindungsverfahren, beispielsweise Stanzpaketieren oder Schweißen auftretende elektrische Verbindung zwischen zwei oder mehr Lamellen führt zu zusätzlichen Verlusten.

Eine elegante Möglichkeit, den nachteiligen Einfluss mechanischer Einwirkung auf die Lamellen zu verringern und gleichzeitig eine gute Isolation der Lamellen zueinander zu erreichen, ist der Einsatz von Klebstoffen als Verbindungsmittel. Diese Klebstoffsysteme haben auch isolierende Eigenschaften analog zu Elektroisolierlacken.

Stahlbleche, die mit Klebstoff versehen sind, sind beispielsweise der US 2018/265757 A1 und der US 2007/231463 A1 zu entnehmen.

Eine dem Fachmann bekannte Vorgehensweise hierfür ist der Einsatz sogenannter Backlacke. Der Einsatz von Backlacken zum Verkleben von gestanzten Elektroblechen wird beispielsweise in der DE 38 29 068 C1 beschrieben. Eine Vorgehensweise zum Einsatz von Backlack ist das Beschichten eines Blechs, insbesondere eines Blechbands, das nachfolgende Herausstanzen einzelner Lamellen aus dem Blech, das zueinander ausgerichtete Positionieren der einzelnen Lamellen zueinander und das nachfolgende Wärmebehandeln des sich ergebenden Blechstapels während eines definierten Zeitraums und bei einer definierten Temperatur. In vielen Fällen werden die Lamellen während der Wärmebehandlung gegeneinander verpresst, zum Beispiel durch eine stirnseitige Kraftbeaufschlagung, bevorzugt mit gleichmäßiger Flächenkraft, in eine axiale Richtung des Blechpakets, die in das Blechpaketinnere hineinweist. Typische Reaktionstemperaturen sind 150 Grad Celsius bis 250 Grad Celsius, eine typische Zeitdauer für ein Reagieren der Backlacke sind 30 bis 150 Minuten mit einer anschließenden Abkühlphase, wobei die genauen Parameter selbstverständlich von dem konkret verwendeten Backlack und der konkret vorliegenden Geometrie abhängen, da beispielsweise eine sich in dem Bauteil einstellende Kerntemperatur Einfluss auf den Verlauf des Backlackverfahrens hat. Mit dieser Vorgehensweise können im Allgemeinen hervorragende elektromagnetische Eigenschaften von Statorpaketen und/oder Rotorpaketen erreicht werden. Aufgrund der zeitaufwändigen Verfahrensweise ist jedoch unmittelbar ersichtlich, dass der Einsatz von Backlacken für eine kontinuierliche Massenproduktion nicht oder zumindest nicht optimal geeignet ist.

Vor dem Hintergrund der erläuterten Konstellation ist Aufgabe der Erfindung, Voraussetzungen für eine im maschinisierten Produktionsumfeld effiziente Herstellung von Blechpaketen, also insbesondere Statorpaketen oder Rotorpaketen, zu schaffen.

Zusätzlich ist vor dem Hintergrund des Wunschs nach weiter erhöhter Effizienz ebenfalls Aufgabe der Erfindung, elektromagnetische Komponenten und elektrische Maschinen mit verbesserter Umsetzung der elektromagnetischen Energie in mechanische Energie bereitzustellen.

Die Aufgabe wird gelöst mit einem Blech für die Herstellung eines Statorpakets oder eines Rotorpakets.

Der Begriff des Blechs bezeichnet allgemein ein Walzwerkerzeugnis aus einem metallischen Material, und kann neben einem Feinblech oder einem Grobblech insbesondere auch ein Metallband, ein Metallband oder Metallblech aus einem weichmagnetischen Werkstoff, ein Stahlband oder ein Elektroband bezeichnen. Andere Herstellungsverfahren des Bleches können optional eingesetzt werden.

Das Blech ist mit einer Klebstoffbeschichtung eines thermisch aktivierbaren Klebstoffs beschichtet. Der Klebstoff enthält:
- 60 Gewichtsteile eines Epoxidharzes bezogen auf seine Festharzform,
- 0,5 bis 15 Gewichtsteile eines latenten Härters,
- 1 bis 15 Gewichtsteile eines latenten Beschleunigers, wobei der latente Beschleuniger ein Harnstoffderivat enthält und das Harnstoffderivat 4,4'-Methylen-bis-(Phenyldimethylharnstoff) ist.

Bevorzugt weist der Klebstoff 1 bis 10 Gewichtsteile des latenten Härters, besonders bevorzugt 2 bis 5 Gewichtsteile des latenten Härters auf.

Der Begriff des latenten Härters bezeichnet einen Stoff, welcher zur Härtung des Epoxidharzes dient, für das Härten jedoch aktiviert werden muss, insbesondere durch Zufuhr von chemischer und/oder thermischer Energie. Der latente Härter wird dem Klebstoff beispielsweise als in Pulverform vorliegender Feststoff zugegeben.

Der Begriff des latenten Beschleunigers bezeichnet einen Stoff, welcher die Härtung des Epoxidharzes durch den latenten Härter beschleunigt. Das Attribut latent bezieht sich auch im Zusammenhang mit dem Beschleuniger darauf, dass auch der Beschleuniger zur Erfüllung seiner Funktion zuvor durch chemische und/oder thermische Energie aktiviert werden muss. Der latente Beschleuniger wird dem Klebstoff beispielsweise als in Pulverform vorliegender Feststoff zugegeben.

Die oben angegebene Zusammensetzung bezieht sich auf die Mischung von den als Festkörper vorliegenden Komponenten in den angegebenen Gewichtsteilen zu einer Klebstoffmischung, welche in Dispersion und/oder Lösung mit einer geeigneten Flüssigkeit zu dem Klebstoff wird, der eine Klebstoffbeschichtung bilden kann. In verwendbarem Zustand, also in zur Beschichtung geeigneten Form, liegt der Klebstoff mit den angegebenen Komponenten bevorzugt als Dispersion der oben angegebenen Zusammensetzung in einem Dispersionsmedium, insbesondere als wässrige Dispersion, vor.

Dadurch, dass ein Blech mit einer Klebstoffbeschichtung aus einem thermisch aktivierbaren Klebstoff bereitgestellt wird, dient das mit dem Klebstoff beschichtete Blech als Vorprodukt für auf flexible Weise anpassbare Herstellverfahren von Blechpaketen, insbesondere Statorpaketen oder Rotorpaketen. Dadurch, dass der Klebstoff zunächst thermisch aktiviert werden muss, kann die Klebefunktion nach dem Ausnehmen von Lamellen aus dem Blech, beispielsweise durch Stanzen, zu einem gewünschten Zeitpunkt beziehungsweise zu einem gewünschten Verfahrensschritt vorgenommen werden. Innerhalb eines kurzen Zeitraums nach dem Aktivieren müssen die Lamellen nach dem Aktivieren (optional bevorzugt auch unter teil- oder vollflächigem Druck in der Presse und/oder in einem nachgeschalteten Verdichtungsprozess) zusammengeführt werden, damit diese während der chemischen Aushärtereaktion miteinander verklebt werden. Nur so können fehlerfreie, nicht delaminierte und geometrisch genaue, mechanisch stabile Pakete erzeugt werden.

Mit der erfindungsgemäßen Klebstoffzusammensetzung weist das Blech eine Oberfläche mit einer kurzen Aktivierungszeit von beispielsweise 0,5 bis 1 Sekunde und eine kurze Aushärtungszeit von nur wenigen Sekunden auf. Diese Eigenschaften gehen mit einer vergleichsweise hohen Temperaturbeständigkeit und einer vergleichsweise hohen Isolations- und Alterungsfähigkeit einher.

Das in dem erfindungsgemäß verwendeten Klebstoff vorhandene Epoxidharz umfasst eine oder mehrere Epoxidharzkomponenten mit mehr als einer Epoxidgruppe, von denen vorzugsweise mindestens ein Epoxidharz ein Erweichungspunkt größer 50° Celsius besitzt.

Bei den Epoxidharzen kann es sich sowohl um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen.

Beispiele für aliphatische Epoxidharze können sein Butandioldiglycidylether, Hexandioldiglycidylether, Dimethylpentandioxid, Butadiendioxid, Diethylenglycoldiglycidylether.

Cycloaliphatische Epoxidharze sind bspw. 3-Cyclohexenylmethyl-3-cyclohexylcarboxylatdiepoxid, 3,4-Epoxycyclohexylalkyl-3',4'-epoxycyclohexancarboxylat, 3,4-Epoxy-6-methylcyclohexylmethyl-3',4'-epoxy-o-methylcyclohexancarboxylat, Vinylcyclohexandioxid, Bis(3,4-Epoxycyclohexylmethyl)adipat, Dicyclopentadiendioxid, 1,2-Epoxy-6-(2,3-epoxypropoxy)hexahydro-4,7-methanoindan.

Aromatische Epoxidharze sind bspw. Bisphenol-A-Epoxidharze, Bisphenol-F-Epoxidharze, Phenol-Novolac-Epoxidharze, Cresol-Novolac-Epoxidharze, Biphenylepoxidharze, Biphenolepoxidharze, 4,4'-Biphenyl-Epoxidharze, Divinylbenzoldioxid, 2-Glycidylphenylglycidylether, Tetraglycidylmethylendianilin.

In einer bevorzugten Ausgestaltung der vorliegenden Erfindung ist das Epoxidharz Bisphenol A-Epoxidharz.

Als latenter Härter wird eine Substanz oder ein Gemisch von Substanzen verwendet, die vorzugsweise bei Temperaturen im Bereich von 80° Celsius bis 200° Celsius Härtungsreaktionen mit den Epoxidharzen des Klebstoffs eingehen.

Der Härter kann Dicyandiamide, Aziridinderivate, Triazinderivate, Imidazoline, Imidazole, o-Tolylbiguanid, cyclische Amidine, organische Hexafluoroantimonat- oder Hexafluorophosphat-Verbindungen oder BF3-Aminkomplexe enthalten. Die Verbindungen können einzeln oder in Kombination eingesetzt werden.

Beispiele sind 2-Methylimidazol, 2-Undecylimidazol, 2-Heptadecylimidazol, 1,2-Dimethylimidazol, 2-Ethyl-4-methylimidazol, 2-Phenylimidazol, 2-Phenyl-4-metylimidazol, 1-Benzyl-2-metylimidazol, 1-Benzyl-2-phenylimidazol, 1-Cyanoethyl-2-metylimidazol, 1-Cyanoethyl-2-undecylimidazol, 1-Cyanoethyl-2-ethyl-4-metylimidazol, 1-Cyanoethyl-2-phenylimidazol, 1-Cyanoethyl-2-undecylimidazoliumtrimellitat, 1-Cyanoethyl-2-phenylimidazolium-trimellitat, 2,4-Diamino-6-[2'-methylimidazolyl-(1')]-ethyl-s-triazin, 2,4-Diamino-6-[2'-undecylimidazolyl-(1')]-ethyl-s-triazin, 2,4-Diamino-6-[2'-ethyl-4'-methylimidazolyl-(1')]-ethyl-s-2,4-diamino-6-[2"methylimidazolyl-(1')]-ethyl-s-triazin, 2-Phenylimidazol, 2-Phenyl-4,5-dihydroxymetylimidazol, 2-Phenyl-4-methyl-5-hydroxymethylimidazol, 2,3-Dihydro-1H-pyrrolo[1,2-a]benzimidazol, (1-Dodecyl-2-methyl-3-benzyl)imidazoliumchlorid, 2-Methylimidazolin, 2-Phenylimidazolin, 2,4-Diamino-6-vinyl-1,3,5-triazin, 2,4-Diamino-6-vinyl-1,3,5-triazin Isocyansäure-Addukt, 2,4-Diamino-6-methacryloyloxyethyl-1,3,5-triazin, 2,4-Diamino-6-methacryloyloxyethyl-1,3,5-triazin Isocyansäure-Addukt, 1,3,5-Triazin, 2,4-Diamino-6-methyl-1,3,5-triazin, 2,4-Diamino-6-nonyl-1,3,5-triazin, 2,4-Diamino-6-phenyl-1,3,5-triazin, 2,4-Dimethoxy-6-methyl-1,3,5-triazin, 2,4-Dimethoxy-6-phenyl-1,3,5-triazin, 2-Amino-4,6-dimethyl-1,3,5-triazin, 2-Amino-4-dimethylamino-6-methyl-1,3,5-triazin, 2-Amino-4-ethoxy-6-methyl-1,3,5-triazin, 2-Amino-4-ethyl-6-methoxy-1,3,5-triazin, 2-Amino-4-methoxy-6-methyl-1,3,5-triazin, 2-Amino-4-methyl-6-phenyl-1,3,5-triazin, 2-Chloro-4,6-dimethoxy-1,3,5-triazin, 2-Ethylamino-4-methoxy-6-methyl-1,3,5-triazin, 1-o-Tolylbiguanid.

Erfindungsgemäß enthält der Beschleuniger ein Harnstoffderivat, wobei das Harnstoffderivat 4,4'-Methylen-bis-(Phenyldimethylharnstoff) ist. Gemäß einem Gedanken enthält der Beschleuniger ein Imidazol. Die erfindungsgemäße Klebstoffzusammensetzung kann darüber hinaus noch weitere Komponenten enthalten.

In einer bevorzugten Ausgestaltung der vorliegenden Erfindung enthält der Härter ein Dicyandiamid, ein Imidazol, einen BF3-Aminkomplex oder eine Kombination derselben.

Der Klebstoff kann in einer Ausgestaltung 1 bis 10 Gewichtsteile eines latenten Beschleunigers, bevorzugt 1 bis 5 Gewichtsteile eines latenten Beschleunigers, besonders bevorzugt 2 bis 5 Gewichtsteile eines latenten Beschleunigers, ganz besonders bevorzugt 2 bis 4 Gewichtsteile eines latenten Beschleunigers enthalten.

In einer anderen bevorzugten Ausführungsform ist vorgesehen, dass der Klebstoff weiterhin 0,2 bis 8 Gewichtsteile, bevorzugt 0,2 bis 4 Gewichtsteile, Absorptionsadditive aufweist. Die Absorptionsadditive, die gemäß dieser weiterführenden Idee vorgesehen sein kann, ist aus der Gruppe der Flammruße und/oder aus der Gruppe der wasserlöslichen Farbstoffe ausgewählt.

Der Begriff der Absorptionsadditive bezeichnet einen Stoff, der Wärmestrahlung absorbiert. Eine Wärmestrahlung absorbierender Stoff geht insbesondere mit dem Vorteil einher, dass die Nutzung eines Verfahrens effizienter ermöglicht wird, bei welchem die thermische Aktivierung des Klebstoffs mittels elektromagnetischer Strahlung, insbesondere mittels Bestrahlens mit Licht im IR-Wellenlängenbereich erfolgt, bevorzugt im NIR-Wellenlängenbereich.

Bevorzugt enthält der Klebstoff eines oder mehrere der dem Fachmann bekannten Isolationsadditive, wobei der Begriff der Isolationsadditive sich auf speziell zur Erhöhung des elektrischen Widerstands des Klebstoffs bereitgestellte Additive bezieht. Die Isolationsadditive können in Mengen von 1 bis 10 Gewichtsteilen, bevorzugt 1 bis 5 Gewichtsteilen, in dem Kleber enthalten sein.

Der im Klebstoff enthaltene latente Beschleuniger besteht vorzugsweise zu wenigstens 50 Gew.-%, noch bevorzugter wenigstens 90 Gew.-%, noch bevorzugter vollständig, aus Harnstoffderivat.

Erfindungsgemäß ist das Harnstoffderivat ein 4,4'-Methylen-bis-(Phenyldimethylharnstoff).

Der im Klebstoff enthaltene latente Beschleuniger besteht vorzugsweise zu wenigstens 50 Gew.-%, noch bevorzugter wenigstens 90 Gew.-%, noch bevorzugter zu wenigstens 98 Gew.-%, speziell bevorzugt vollständig, aus 4,4'-Methylen-bis-(Phenyldimethylharnstoff).

Gemäß einem Gedanken wird ein Harnstoffderivat eingesetzt, bei welchem mindestens eines, bevorzugt zwei, besonders bevorzugt drei Wasserstoffatome durch, voneinander unabhängig, Alkylgruppen und/oder Phenylgruppen, die ihrerseits substituiert sein können, ersetzt sind. Bevorzugt handelt es sich bei den Alkylgruppen um Methyl, Ethyl, Propyl oder Butyl, bevorzugt Methyl; bei der Phenylgruppe handelt es sich um Phenyl oder um eine tief substituiertes finden, bevorzugt in Position 4, ebenfalls bevorzugt als ein kühl 1 der oben genannten Alkyle. In einer weiteren Alternative wird im Sinne der Erfindung ein difunktionelles Harnstoffderivat als ein oben beschriebenes Derivat bezeichnet, welches zwei funktionelle Gruppen aufweist. Funktionelle Gruppen sind Atomgruppen, die die Stoffeigenschaften und insbesondere das Reaktionsverhalten der Verbindung maßgeblich bestimmen, insbesondere gehen die funktionellen Gruppen Reaktionen ein. Ferner ist das erfindungsgemäß einzusetzenden Harnstoffderivat halogenfrei. In einer Alternative weist das erfindungsgemäß einzusetzenden Harnstoffderivat 2 Harnstoffderivate als funktionelle Gruppen auf. Vorteilhaft können dadurch Epoxyharze ohne die Anwesenheit von Dicyanamiden als Vernetzer gehärtet werden.

Gemäß einem Gedanken wird als Harnstoffderivat auch oder ausschließlich ein unsymmetrisch substituierter Harnstoff verwendet.

Gemäß einem Gedanken wird wird eine Mischung aus zwei, drei oder mehreren der vorgenannten eingesetzt.

Als Harnstoffderivat kann auch ein Stoff 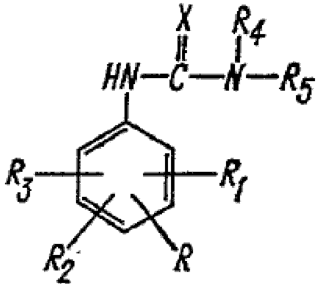
vorgesehen sein mit R: Wasserstoff oder eine Gruppe gemäß 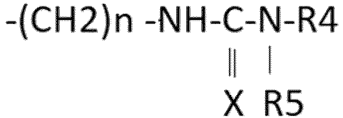 mit
n = 0 oder 1, bevorzugt 1,
X = O oder S, bevorzugt O,
R1, R2 und R3: jeweils Wasserstoff, ein Halogen, NitroGruppe, eine substituierte oder nichtsubstituierte Alkylgruppe, Alkoxylgruppe, Arylgruppe oder Aryloxylgruppe,
R4: Alkylgruppe, Alkenylgruppe, Cycloalkylgruppe, Cycloalkenylgruppe, Aralkylgruppe optional substituiert durch ein Halogen, Hydroxyl oder Cyan, bevorzugt Methyl, Ethyl, Propyl, Butyl, besonders bevorzugt Methyl,R5: wie R4 oder Alkoxylgruppe, R5 optional mit R4 einen heterocyklischen Ring bildend,
oder ein N,N-Dimethyl-N'-(3,4-Dichlorophenyl)Harnstoff oder ein N,N-Dimethyl-N'-(3-chioro-4-methyl-phenyl)Harnstoff oder ein N,N-Dimethyl-N'-(3-chloro-4-methoxyphenyl)Harnstoff oder ein N,N-Dimethyl-N'(3-chloro-4-ethylphenyl)Harnstoff oder ein N,N-Dimethyl-N'-(4-methyl-3-nitrophenyl)Harnstoff oder ein N-(N'-3,4-dichlorophenylcarbamoyl)morpholine oder ein N,N-dimethyl-N' (3-chloro-4-methylphenyl)thio-Harnstoff;
erfindungsgemäß ist das Harnstoffderivat 4,4'-Methylen-bis-(Phenyldimethylharnstoff);
oder eine Mischung aus zwei, drei oder mehreren der vorgenannten. Eine solche Mischung enthält bevorzugt mindestens 10%, 25%, bevorzugt 50%, 60%, 70%, 80% oder 90% 4,4'-Methylen-bis-(Phenyldimethylharnstoff). Der Vorteil dieser Harnstoffderivate ergibt sich aus der GB 1293142 A, die Erfinder haben gefunden, dass derartige Derivate sich hervorragend für die Herstellung von elektromagnetischen Komponenten nutzen lassen.

Das Harnstoffderivat kann auch eine Mischung aus mehreren der vorgenannten Harnstoffderivate sein.

Die mittlere Teilchengröße (arithmetisches Mittel) des Harnstoffderivats ist bevorzugt zwischen 1 Mikrometer und 30 Mikrometer.

Es kann vorgesehen sein, dass die Klebstoffbeschichtung auf dem Blech einseitig oder beidseitig aufgebracht ist. Wenn beidseitig eine Klebstoffbeschichtung aufgebracht ist, kann die Dicke der Beschichtung gleich sein, aber auch unterschiedliche Dicken können vorgesehen sein.

Das Aufbringen des Klebstoffs auf das Blech kann mittels bekannter Verfahren erfolgen, insbesondere mittels Coil Coating (Rolle zu Rolle).

Als bevorzugte Dicke der Klebstoffbeschichtung, das bedeutet bei einseitigem Klebstoff die Dicke der Beschichtung auf der einen Seite beziehungsweise bei zweiseitiger Klebstoffbeschichtung die Gesamtdicke der Klebstoffbeschichtung auf beiden Seiten addiert, beträgt zwischen 1 Mikrometern und 20 Mikrometern, bevorzugt zwischen 2 Mikrometern und 10 Mikrometern. Besonders bevorzugt ist eine Gesamtdicke zwischen 4 und 8 Mikrometern.

Eine einseitig vorgenommene Klebstoffbeschichtung des Blechs geht mit einer apparativ einfacheren Herstellung einher, eine beidseitige Klebstoffbeschichtung des Blechs geht wiederum mit dem Vorteil einher, dass bei einer Aufeinanderpositionierung von einzelnen aus dem Blech hergestellten Lamellen Klebstoffoberfläche an Klebstoffoberfläche positioniert wird, wodurch eine verbesserte Haftung und dadurch eine höhere mechanische Stabilität der elektromagnetischen Komponente erreicht wird, was in Versuchen gezeigt wurde und weiter unten dargestellt ist.

Besonders bevorzugt ist die erste Teilbeschichtung der ersten Blechoberfläche und die zweite Teilbeschichtung der zweiten Blechoberfläche mit einer zweiten Dicke derart aneinander angepasst, dass die erste Dicke wenigstens das 1,5-fache, bevorzugt das 2-fache der zweiten Dicke beträgt. In einer derartigen Konfiguration ist die erste Dicke für eine hervorragende Isolation verantwortlich, so dass die Gefahr von Klebstofflücken nahezu verschwindend ist, während die dünnere der beiden, nämlich die mit der zweiten Dicke, aufgetragene zweite Teilbeschichtung im Wesentlichen der Herstellung der hervorragenden Haftung dient.

Ganz besonders bevorzugt ist eine beidseitige Beschichtung mit einer Gesamtdicke beider Beschichtungen zwischen 4 und 6 Mikrometern. Eine derart geringe Beschichtungsdicke ist mit den erfindungsgemäß oder gemäß Weiterbildungen der Erfindung verwendeten Klebstoffen aufgrund ihrer hohen Reaktivität möglich, wie die hergestellten Beispiele belegen. Bekannte Backlack-Klebstoffe erfordern in der Regel höhere Beschichtungsdicken als 6 Mikrometer (z.B. Backlack beidseitig, je 5µm pro Seite). Dies führt zu dem Vorteil, dass aus den erfindungsgemäßen Blechen oder seinen Weiterbildungen Blechpakete, insbesondere Statoren oder Rotoren hergestellt werden können, die einen signifikant höheren Eisenfüllfaktor aufweisen als es mittels Backlack-Verfahren hergestellte Komponenten tun. Vorteil ist eine etwas höhere Effizienz der die Komponente aufweisenden elektrischen Maschine. Aber Klebstoffbeschichtungen zwischen insgesamt 1 und 20 Mikrometern, bevorzugt 2 und 8 Mikrometern, können vorgesehen sein.

In einer weiteren Alternative ist zwischen Blech und Klebstoffschicht eine Isolierlackschicht angeordnet und/oder auf der Klebstoffschicht gegenüberliegenden Seite nur Isolierlack angeordnet.

Besonders bevorzugt ist das Blech als nicht kornorientiertes Elektroband, auch als sogenanntes NO-Elektroband bezeichnet, ausgebildet oder aus einem solchen abgetrennt, wobei das nicht kornorientierte Elektroband neben Fe und unvermeidbaren Verunreinigungen folgende Elemente enthält (alle Angaben in Gew.-%) :
0,1 bis 3,50 Si,
0,01 bis 1,60 Al,
0,07 bis 0,65 Mn,
optional bis zu 0,25 P.

Es versteht sich, dass die Gesamtheit aller Legierungsbestandteile und der Verunreinigungen sich zu 100 Gew.-% ergänzt.

Besonders bevorzugt werden die nachfolgenden Bedingungen eingehalten (alle Angaben in Gew.-%):
2,3 bis 3,40 Si,
0,3 bis 1,1 Al,
0,07 bis 0,250 Mn,
optional bis zu 0,030 P, Rest Fe und unvermeidbare Verunreinigungen.

Es versteht sich, dass die Gesamtheit aller Legierungsbestandteile und der Verunreinigungen sich zu 100 Gew.-% ergänzt.

Bevorzugt weist das nicht kornorientierte Elektroband oder das nicht kornorientierte Blech spezifische Ummagnetisierungsverluste bei P1,0; 50 Hz im Bereich von 0,7 bis 7 W/kg und bei P1,5; 50 Hz im Bereich von 1,8 bis 15 W/kg auf und/oder eine Polarisation bei J2500 im Bereich von 1,45 T bis 1,71 T und bei J5000 im Bereich von 1,6 T bis 1,8 T, ermittelt in Anlehnung an DIN EN 60404-2.

In einer bevorzugteren Ausführungsform weist das nicht kornorientierte Elektroband oder das nicht kornorientierte Blech spezifische Ummagnetisierungsverluste bei P1,0; 50 Hz im Bereich von 0,8 bis 3,5 W/kg und bei P1,5; 50 Hz im Bereich von 1,9 bis 8,0 W/kg und/oder eine Polarisation bei J2500 im Bereich von 1,47 bis 1,71 T und bei J5000 im Bereich von 1,58 bis 1,80 T, ermittelt in Anlehnung an DIN EN 60404-2, auf.

In einer weiteren bevorzugten Ausführungsform weist das nicht kornorientierte Elektroband oder das nicht kornorientierte Blech spezifische Ummagnetisierungsverluste bei P1,0; 50 Hz im Bereich von 1,0 bis 1,5 W/kg und bei P1,5; 50 Hz im Bereich von 2,2 bis 3,3 W/kg und/oder eine Polarisation bei J2500 im Bereich von 1,47 bis 1,57 T und bei J5000 im Bereich von 1,58 bis 1,65 T, ermittelt in Anlehnung an DIN EN 60404-2, auf.

Vorzugsweise weist das nicht kornorientierte Elektroband oder das nicht kornorientierte Blech spezifische Ummagnetisierungsverluste bei P1,0; 400 Hz im Bereich von 8 bis 120 W/kg; bei P1,5; 400 Hz von 18 bis 360 W/kg; und/oder eine Polarisation bei J2500 im Bereich von 1,45 T bis 1,75 T und bei J5000 im Bereich von 1,45 T bis 1,85 T und bei J10.000 im Bereich von 1,50 und 1,95 T ermittelt in Anlehnung an DIN EN 60404-2 auf.

In einer weiteren bevorzugten Ausführungsform weist der Werkstoff spezifische Ummagnetisierungsverluste bei P1,0; 400 Hz im Bereich von 10 bis 25 W/kg; bei P1,5; 400 Hz von 25 bis 49 W/kg; und/oder eine Polarisation bei J2500 im Bereich von 1,45 T bis 1,75 T und bei J5000 im Bereich von 1,45 T bis 1,85 T und bei J10.000 im Bereich von 1,50 und 1,95 T ermittelt in Anlehnung an DIN EN 60404-2 auf.

Vorzugsweise weist das nicht kornorientierte Elektroband oder das nicht kornorientierte Blech eine Streckgrenze in Längsrichtung bei Standardnormalbedingungen von 190 bis 610 MPa und eine maximale Zugfestigkeit von 310 bis 740 MPa und eine Mindestbruchdehnung A80 von 6 bis 48 % gemessen in Anlehnung an DIN EN ISO 6892-1 sowie eine Härte Hv5 von 100-250 auf.

In einer besonders bevorzugten Ausführungsform weist der Werkstoff eine Streckgrenze in Längsrichtung bei Raumtemperatur von 310 bis 600 MPa und eine maximale Zugfestigkeit von 400 bis 640 MPa sowie eine Bruchdehnung A80 von 7 bis 32 % gemessen in Anlehnung an DIN EN ISO 6892-1 sowie eine Härte Hv5 von 130-250 auf.

Das Material weist bevorzugt eine Anisotropie bei P1,0; 400 Hz im Bereich von 5 bis 17 % auf.

Alternativ kann ein Blech vorgesehen sein aus einem weichmagnetischen Werkstoff mit den nachfolgenden Legierungsbestandteilen:
Fe, neben Fe und unvermeidbaren
Verunreinigungen bestehend aus (alle Angaben in Gew.-%):
   0,1 bis 4,0 Si,
   0,01 bis 2,60 Al,
   0,07 bis 3,0 Mn,
   optional bis zu 0,5 P,
   optional bis zu 0,015 B,
   optional bis zu 0,2 Sb,
   optional bis zu 0,01 Zn,
   optional bis zu 5 Cr,
   optional bis zu 5 Ni,
   optional bis zu 0,25 V,
   optional bis zu 0,5 Sn,
   optional bis zu 0,01 As,
   optional bis zu 0,3 Nb,
   optional bis zu 0,5 W,
   optional bis zu 0,85 Zr,
   optional bis zu 0,2 Mo,
   optional bis zu 1,0 Cu,
   optional bis zu 0,5 Ti,
   optional bis zu 0,5 C,
   optional bis zu 0,01 Ce.

Geeignet und bevorzugt verwendet werden Bleche, insbesondere Elektroband, mit einer Dicke zwischen 0,05 und 2,5 mm, wobei Dicken zwischen 0,1 und 1,0 mm bevorzugt werden. Besonders bevorzugt werden Dicken zwischen 0,15 und 0,4 mm eingesetzt.

Alternativ kann das Blech ein Mehrlagenverbund (Sandwich) aus einer Blechlage, beispielsweise aus einem der oben beschriebenen Elektrobänder, sein und einer oder mehreren weiteren Lagen bestehen, beispielsweise mit einer akustisch dämpfenden Funktionslage (z.B. bondal E). Des Weiteren kann das Blech auch ein - oder beidseitig mit einer akustisch dämpfenden Funktionslage (z.B. Halb-bondal E) beschichtet sein, so dass das beschriebene Klebstoffsystem direkt an die akustisch dämpfende Funktionslage (z.B. chemische Basis Acrylat) anbindet. Aus der Technik ist bekannt, dass Epoxidharzsysteme gute Verträglichkeit aufweisen.

Alternativ kann das Blech auf einer Seite eine akustisch dämpfenden Funktionslage aufweisen und auf der gegenüberliegenden Blechseite eine erfindungsgemäß einzusetzende Klebstoffschicht.

Versuche haben gezeigt, dass die Bereitstellung eines erfindungsgemäßen Blechs oder einer seiner Weiterbildungen in hervorragender Weise eine mit höchster Reaktivität des Klebstoffs durchgeführte Fügung von Blechlamellen erlaubt mit dem weiteren Vorteil, dass geeignete Verfahren bereitgestellt werden können, mit denen eine Herstellung von Blechpaketen auch im linearen Fertigungsverfahren mit hoher Stückzahl pro Zeit möglich ist. Die erwähnten Versuche werden weiter unten als Beispiele genannt.

Mit dem erfindungsgemäß bereitgestellten Blech ist in besonders vorteilhafter Weise eine Herstellung von Blechpaketen für einen Elektromotor möglich, weil nämlich nach Kenntnis der Entwickler zum ersten Mal ein zur Weiterverarbeitung vorbereitetes Ausgangsmaterial bereitgestellt wurde, dass sowohl bei Inlineverfahren, das heißt bei Verfahren in kontinuierlicher Prozessierung, als auch bei Offlineverfahren, das heißt bei einem an dem Backlackkleben orientierten Verfahren, mit hoher Wirtschaftlichkeit genutzt werden kann.

Zusätzlich zu dieser besonders vorteilhaften Eigenschaftskombination hat sich überraschenderweise gezeigt, dass die erfindungsgemäß bereitgestellten Bleche außerdem langzeitstabil sind. Das bedeutet insbesondere, dass insbesondere in Kombination mit der Möglichkeit zur Inlineherstellung von Blechpaketen die erfindungsgemäß bereitgestellten Bleche die Grundvoraussetzungen für die Integration in typische Produktionsverfahren der Automobilindustrie mitbringen, da die Langzeitstabilität zum einen ein Lagern über einen längeren Zeitraum, zumindest bis hin zu einigen Wochen, erlauben und außerdem aufgrund der Temperaturstabilität auch eine Prozessierung im Sinne einer Just-In-Time-Anlieferung ermöglichen, die typischerweise auch im Hochsommer in nichttemperierten Lastkraftwagen erfolgt und hierbei über einen längeren Zeitraum Temperaturen von wenigstens 40 Grad Celsius widerstehen können muss.

Ein weiterer Vorteil der erfindungsgemäß bereitgestellten Bleche ist, dass sie mechanisch stabil sind, das heißt insbesondere, dass der Klebstoff gegenüber bisher verwendeten Klebstoffen aus den eingangserwähnten Backlack-Verfahren beim Verpressen formstabil bleibt.

Auch ist die Haftung temperaturstabil, wie die unten dargestellten Beispiele belegen. Ein sogenanntes Ausquetschen des Klebstoffsystems während des Verpressens findet im Gegensatz zum herkömmlichen Backlack-System nicht oder nur noch sehr stark reduziert statt.

Durch die gezielte Kombination von Blech, in einer Weiterbildung von speziell ausgewähltem Blech, für die Nutzung in der Elektromobilität sowie von spezifisch ausgesuchten Klebstoffzusammensetzungen wird eine bisher nicht bekannte Eigenschaftskombination bereitgestellt, nämlich die Möglichkeit, im großindustriellen Maßstab Blechpakete und elektromagnetische Komponenten, nicht zuletzt für die Automobilindustrie, bereitstellen zu können. Dadurch wird dem mit der Umsetzung der Erfindung betrauten Fachmann eine Flexibilität bereitgestellt, die bislang unbekannt war.

Potenzielle Vorteile ergeben sich beispielsweise für die elektromagnetische, mechanische und thermische Maschinenauslegung, die Möglichkeit einer anderen Blechwahl, höhere Konstruktionsfreiheit im Lamellendesign und Vorteile hinsichtlich möglicher Bauteiltoleranzen und Medien- und/oder Wärmeführung. Weitere Vorteile ergeben sich in der Komponenten- und Maschinenfertigung (beispielsweise bei Handhabung von kompakten und soliden Bauteilen) und der mechanischen Bearbeitung. Weitere Vorteile sind bei elektrischen Maschinen mit einem der erfindungsgemäßen Bleche oder einer seiner Weiterbildungen eine höhere Leistung und Effizienz, ein geringerer erforderlicher Bauraum, bessere geometrische Eigenschaften (beispielsweise erreichbar mittels Nachverdichten gegen einen Anschlag, insbesondere mit konstanter Flächenpressung, mit dem Vorteil der besseren Maßhaltigkeit der elektromagnetischen Komponente) sowie, je nach Auslegung, akustische Vorteile.

Ein weiterer Aspekt der Erfindung betrifft ein Verfahren zum Herstellen eines Blechpakets für eine elektrische Maschine, bevorzugt für einen Elektromotor. Das Blechpaket ist bevorzugt entweder ein Statorpaket oder ein Rotorpaket, das heißt es handelt sich um einen Stator oder einen Teil eines Stators beziehungsweise um einen Rotor oder einen Teil eines Rotors.

Das Verfahren weist die folgenden Schritte auf:
A) In einem ersten Schritt wird ein erfindungsgemäßes Blech oder eine seiner Weiterbildungen bereitgestellt. Bei dem Blech kann es sich beispielsweise um ein Elektroband handeln oder um eine aus einem Blechband abgetrennte Platine.
B) Das Blech wird in eine Inline-Anlage transportiert. Die Inline-Anlage weist zumindest folgende Stationen auf: ein Stanzwerkzeug, Mittel zur Ausgabe von Infrarotstrahlung sowie einen Auspressstempel.

Der Begriff der Inline-Anlage bezieht sich darauf, dass eine Anzahl von Bearbeitungsstationen, nämlich wenigstens die oben genannten, in einer vorgegebenen Reihenfolge angeordnet sind, und in die Inline-Anlage hineingeführtes Blech, beispielsweise Elektroband, automatisiert und sequenziell an den vorgegebenen Stationen bearbeitet werden.

Das Stanzwerkzeug ist ein Werkzeug, mit welchem eine, bevorzugt auch gleichzeitig mehr als eine wie beispielsweise vier, Lamellen aus dem Blech ausgestanzt werden. Das Stanzen der Lamellen mit dem Stanzwerkzeug erfolgt in Schritt C) und bevorzugt derart, dass eine Anzahl von Verbindungsstegen, beispielsweise von drei Verbindungsstegen, zwischen der jeweils ausgestanzten Lamelle und dem ursprünglich in der Inline-Anlage hineintransportierten Blech bestehen bleibt, sodass die ausgestanzte Lamelle noch einstückiger Bestandteil des Blechs ist. Dies dient, einen weiteren Transport der Lamellen gemeinsam mit dem Blech, insbesondere dem Blechband, durch die Inline-Anlage zu ermöglichen.

Der Begriff der Lamelle bezeichnet in dem obigen Kontext ein durch Heraustrennen aus dem Blech gewonnenes Formteil, insbesondere ein durch Ausstanzen gewonnenes Formteil.

In einer bevorzugten Alternative wird ein Blechpaket, bevorzugt das Rotorpaket, durch einen konventionellen Paketierprozess, beispielsweise Stanzpaketieren, hergestellt und ein weiteres Blechpaket, bevorzugt das Statorpaket für dieselbe elektrische Maschine wie das konventionell hergestellte Statorpaket, mit dem oben beschriebenen, erfindungsgemäßen Verfahren hergestellt. Dies kann beispielsweise in einem kombinierten Verfahren oder sequenziell erfolgen. Bevorzugt kann vor dem Paketieren ein Spannungsarmglühen oder ein Rekristallisierungsglühen, optional zusätzlich ein Beschichtungs-, ein Aktivierungsschritt und/oder ein Inspektionsschritt, durchgeführt werden. Aktivierungsschritt meint in diesem Zusammenhang die Aktivierung des eingesetzten Klebstoffes.

Die Mittel zur Ausgabe von Infrarotstrahlung können insbesondere als NIR-Emitter ausgebildet sein, also als Leuchtmittel, die zur Ausgabe von elektromagnetischer Strahlung im NIR-Wellenlängenspektrum, also mit Wellenlängen zwischen 780 nm bis 3 µm ausgebildet ist.

Das Beleuchten der Formteile erfolgt in einer bevorzugten Verfahrensführung in einem NIR-Wellenlängenbereich, wobei bevorzugt eine Wellenlänge zwischen 0,8 Mikrometern und 1,2 Mikrometern verwendet wird und besonders bevorzugt ein Maximum der Leuchtleistung bei NIR-Strahlung mit einer Wellenlänge zwischen 0,85 Mikrometern und 0,9 Mikrometern erreicht wird. Die Aktivierung (Bestrahlung) erfolgt nur in dem Bereich der beschichteten Fläche, welche zur Verklebung zur Verfügung stehen soll (aktiv ist). Die übrige Fläche wird mit einer Blende abgeschirmt, um nur den erforderlichen Bereich zu aktivieren. Das Trennen einzelner Blechpakete bei erreichter Bauhöhe erfolgt über ein Überaktivieren einzelner Lamellen, sodass diese keine Reaktivität mehr aufweisen und damit keine Verklebung mehr eingehen.

Weiterhin weist die Inline-Anlage, wie erwähnt, einen Auspressstempel auf. Dieser Auspressstempel ist ein Stempel, welcher durch zur Blechoberfläche senkrechte Kraftauswirkung die noch mit einem Steg oder mehreren Stegen mit dem Blech, insbesondere Blechband, verbundenen Lamellen sequenziell durch Trennen des Stegs beziehungsweise der Stege von dem Blech trennt und bevorzugt im selben Prozessschritt die Lamelle in eine unterhalb des Blechs angeordnete Aufnahmevorrichtung befördert, in welcher die Lamellen gesammelt werden.

Innerhalb der Inline-Anlage findet ein Stanzen eines Formteils, insbesondere eines als Statorlamelle oder als Rotorlamelle ausgebildeten Formteils aus dem in Schritt A) bereitgestellten Blech mit dem Stanzwerkzeug statt, wobei bevorzugt ein Steg oder mehrere, insbesondere drei, Stege eine zum Weitertransport des Formteils ausreichende Verbindung mit dem Blech aufweisen.

D) Es erfolgt hiernach ein Beleuchten der Klebstoffbeschichtung des in Schritt C) ausgebildeten Formteils mit Infrarotstrahlung mittels des Mittels zur Ausgabe von Infrarotstrahlung, um ein Aktivieren der Klebstoffbeschichtung zu erreichen. Mit anderen Worten wird eine zur Aktivierung ausreichende Temperatur in dem Blech und insbesondere dem Klebstoff herbeigeführt, beispielsweise durch Beleuchten für einen Zeitraum von zwischen 0,5 und 1 Sekunde bei einer Emissionsleistung zwischen 5 und 10 Kilowatt, was für eine Aktivierungstemperatur zwischen 100 Grad Celsius und 250 Grad Celsius im Klebstoff ausreichend ist.

E) Es erfolgt ein Auspressen des Formteils mit dem Auspressstempel und, bevorzugt in derselben Bewegung, ein Einführen des Formteils in eine Aufnahmevorrichtung, in welcher sich ein Positionierbereich befindet. Der Positionierbereich dient dem position- und/oder winkelausgerichteten Positionieren des jeweils in den Positionierbereich herabfallenden Formteils gegenüber den bereits dort vorhandenen Formteilen, sodass schließlich ein Stapel einander ausgerichteter und mit aktiviertem Klebstoff versehener Formteile erhalten wird.

Der Positionierbereich kann beispielsweise ein zylindrisches Rohr sein, welches unterhalb der Beförderungsebene des Formteils liegt derart, dass nach dem Auspressen bereits durch Schwerkraft ein Hinabfallen des Formteils zu einem bereits vorhandenen Formteilstapel erfolgt. Das Ausrichten des Formteils erfolgt durch den Positionierbereich, beispielsweise ausgebildet als zylindrisches Hohlrohr mit einem Mantelquerschnitt, der im Wesentlichen dem Querschnitt der Formteile entspricht und mit diesem in vorgesehener Positionierung ausgerichtet ist.

Die Schritte C) bis E) werden in wunschgemäßer Anzahl wiederholt, bis eine gewünschte Anzahl von Formteilen in dem Positionierbereich liegt und einen Formteilstapel bilden. Besonders bevorzugt sind Stanzwerkzeug und Auspressstempel Bestandteil einer selben Presse mit dem Vorteil, dass eine hohe Synchronisierung der Stanz- und Auspressvorgänge vorliegt.

Besonders bevorzugt sind die Mittel zur Ausgabe der Infrarotstrahlung zwischen Stanzwerkzeug und Auspressstempel angeordnet und weisen mindestens ein oberes Leuchtmittel auf, das in eine Stanzrichtung auf die erste Blechoberfläche gerichtet ist, ein mindestens ein unteres Leuchtmittel auf, das sich jenseits der Seite des Blechs befindet, auf welcher das Stanzwerkzeug sich befindet und gegen eine Stanzrichtung gerichtet ist oder sowohl mindestens ein oberes als auch mindestens ein unteres Leuchtmittel aufweist. Die Ausrichtung des Leuchtmittels auf die Lamellenoberfläche muss nicht zwingend rechtwinklig erfolgen, sondern kann auch in einem anderen Winkel, vorgenommen sein.

Insbesondere in einem Fall, in welchem ein oberes und ein unteres Leuchtmittel vorhanden sind, ist in besonders geeigneter Weise eine Aktivierung von Klebstoff sowohl auf einer ersten als auf der gegenüberliegenden zweiten Blechseite möglich mit dem vorteilhaften Ergebnis, dass eine hervorragende Haftung der Bleche miteinander zu erwarten ist.

Gemäß einer besonders bevorzugten Weiterbildung des Verfahrens erfolgt nach dem Positionieren des letzten Formteils mit der gewünschten Anzahl von Formteilen ein nachgelagertes Verdichten des erhaltenen Blechpakets. Der Verdichtungsschritt wird ausgeführt, indem in eine axiale Richtung des Blechpakets mit einem gleichmäßigen Flächendruck stirnseitig in eine axiale Richtung eine Komprimierung des Blechpakets durchgeführt wird. Durch die Komprimierung wird erreicht, dass der Haftverbund zwischen den einzelnen Formteilen besonders gut hergestellt wird und trägt damit zu der Langlebigkeit des Blechpakets bei. Der nachgelagerte Verdichtungsschritt findet bevorzugt außerhalb der Presse in einer nachgelagerten Verdichtungsstation statt. Alternativ kann der Verdichtungsschritt aber auch durch, bevorzugt teil oder vollflächigen, Druck des Auspressstempels im Stanzwerkzeug erfolgen.

Bevorzugt ist, dass die Schritte C) bis E) mit einer Hubzahl von wenigstens 80 pro Minute, bevorzugt wenigstens 100 pro Minute, besonders bevorzugt wenigstens 120 pro Minute und/oder bis zu 1000 pro Minute, bevorzugt bis zu 300 pro Minute, besonders bevorzugt bis zu 220 pro Minute, durchgeführt wird. Das heißt, dass innerhalb von einer Minute im Positionierbereich eine der Hubzahl entsprechende Anzahl von Formteilen eingeführt wird.

Eine alternative Verfahrensführung sieht vor, dass nach Bereitstellen eines Blechs oder mehrerer Bleche, bevorzugt eines Elektrobands, in einem Schritt B) ein Stanzen einer Anzahl von Formteilen aus dem in Schritt A) bereitgestellten Blech in dem Stanzwerkzeug stattfindet, hiernach ein positions- und/oder winkelausgerichtetes Positionieren der Formteile übereinander vorgenommen wird und diese Formteile in einer separaten Station, die beispielsweise als Ofen ausgebildet sein kann, gepresst und für einen vorgegebenen Zeitraum auf eine vorgegebene Temperatur oder auf Temperaturen in einer vorgegebenen Temperaturspanne erwärmt wird. Diese Vorgehensweise ist der aus dem eingangs erläuterten Backlack-Verfahren bekannten Vorgehensweise recht ähnlich, unterscheidet sich jedoch in dem verwendeten Ausgangsmaterial, welches spezifisch eines der eingangs genannten Materialien ist. Nur mit den eingangs genannten Materialien ist möglich, einerseits eine lange Zeit der Lagerung erreichen zu können und gleichzeitig die Bereitstellung von Blechpaketen erreichen zu können mit einer gewissen Anzahl von fertiggestellten Blechpaketen pro Zeit, so dass im Ergebnis mit einer guten Nutzung des Verfahrens in Massenfertigung gerechnet werden kann.

Bevorzugt ist der vorgegebene Zeitraum zwischen 10 Minuten und 60 Minuten, besonders bevorzugt zwischen 10 Minuten und 40 Minuten, lang. Mit den erfindungsgemäß verwendeten, eingangs genannten Blechen ist dieser Zeitraum völlig ausreichend, um fertiggestellte Blechpakete zu erhalten. Besonders bevorzugt beträgt die vorgegebene Temperatur zwischen 100 Grad Celsius und 200 Grad Celsius, insbesondere zwischen 100 Grad Celsius und 150 Grad Celsius. In Laborversuchen konnten beispielsweise erfolgreich Proben hergestellt werden mit einer vorgegebenen Temperatur von 120 Grad Celsius und einem vorgegebenen Zeitraum von 30 Minuten. Mit diesem Beispiel zeigt sich auch einer der Vorteile des erfindungsgemäßen Verfahrens gegenüber einem konventionellen Backlackverfahren, bei welchem sowohl höhere Temperaturen als auch höhere Zeiträume üblich sind, beispielsweise ein Glühen bei 190 Grad Celsius für einen Zeitraum von 60 Minuten. Grund ist, dass es gelungen ist, ein Blech mit einem gegenüber bislang verwendeten Klebstoffen deutlich erhöht reaktiven Klebstoff bereitzustellen. Großen Einfluss auf die in der Praxis notwendigen Verklebungsparameter (Zeit / Druck und Temperatur) ist konkret von der vorliegenden Geometrie abhängig, da beispielsweise eine sich in dem Bauteil einstellende Kerntemperatur Einfluss auf den Verlauf des Verklebungsverfahrens hat.

Es kann vorgesehen sein, nach Abschluss der Verfahren zur Herstellung eines Blechpakets dessen Kanten zu reinigen, um eventuelle Kleberreste an einer Blechpaketkante oder Blechpaketseite zu beseitigen. Die Reinigung kann chemisch und/oder mechanisch erfolgen.

Um die Festigkeit der Klebstoffschicht zu erhöhen, kann vorgesehen sein, anorganische und/oder organische Fasern in der Klebstoffbeschichtung anzuordnen.

### Beispiele

Beispiele für ein erfindungsgemäßes Blech und dessen vorteilhaftem Verhalten für die erfindungsgemäßen Verfahren ergeben sich aus durchgeführten Versuchen.

Es wurden folgende Proben hergestellt:
Platinen aus einem Elektroband M800-50A (nach EN 10027-1) mit der Werkstoffkennzahl 1.0816 (nach EN 10027-2), Dicke 0,5 mm, Länge x Breite: 200 x 150 mm.

Es wurden Proben 0, 1, 2 und 3 hergestellt. Probe0, 1 und 2 sind Vergleichsproben, sie sind mit einem nicht erfindungsgemäßen Klebstoff beschichtet.

Probe3 ist eine erfindungsgemäße Probe.

Die hergestellten Proben sind Platinen der oben genannten Art, die mit einer Auftragswalze mit Klebstoff beschichtet wurden gemäß den folgenden Parametern:

| Probenbezeichnung | Gewichtsteile Epoxidharz (als Festharz vorliegend) | Gewichtsteile Härter | Gewichts - teile Beschleu -niger | Ausgewählter Beschleuniger |
|---|---|---|---|---|
| Probe0 | 60 | 3,5 | 4,5 | Herkömmlicher Beschleuniger (DYHARD URAcc57, Markenname) |
| Probel | 60 | 3,5 | 3,0 | Herkömmlicher Beschleuniger (DYHARD URAcc13, Markenname) |
| Probe2 | 60 | 3,5 | 3,0 | Herkömmlicher Beschleuniger (DYHARD URAcc13, Markenname) |
| Probe3 | 60 | 3,5 | 3,0 | 4,4'-Methylen-bis-(Phenyldimethyl-harnstoff) |

| | | | | |
|---|---|---|---|---|
| Schichtdicken Probe0: 1. Oberfläche: 6 µm, 2. Oberfläche 0 µm, Probel: 1. Oberfläche: 6 µm, 2. Oberfläche 0 µm, Probe2: 1. Oberfläche: 4 µm, 2. Oberfläche 2 µm, Probe3: 1. Oberfläche: 4 µm, 2. Oberfläche 2 µm. | | | | |

Von jeder der Probenart wurden mehrere Exemplare hergestellt. Zur Prüfung der Langzeitstabilität wurden 18 Sandwich-Aufbauten jeweils zweier gleicher Proben hergestellt.

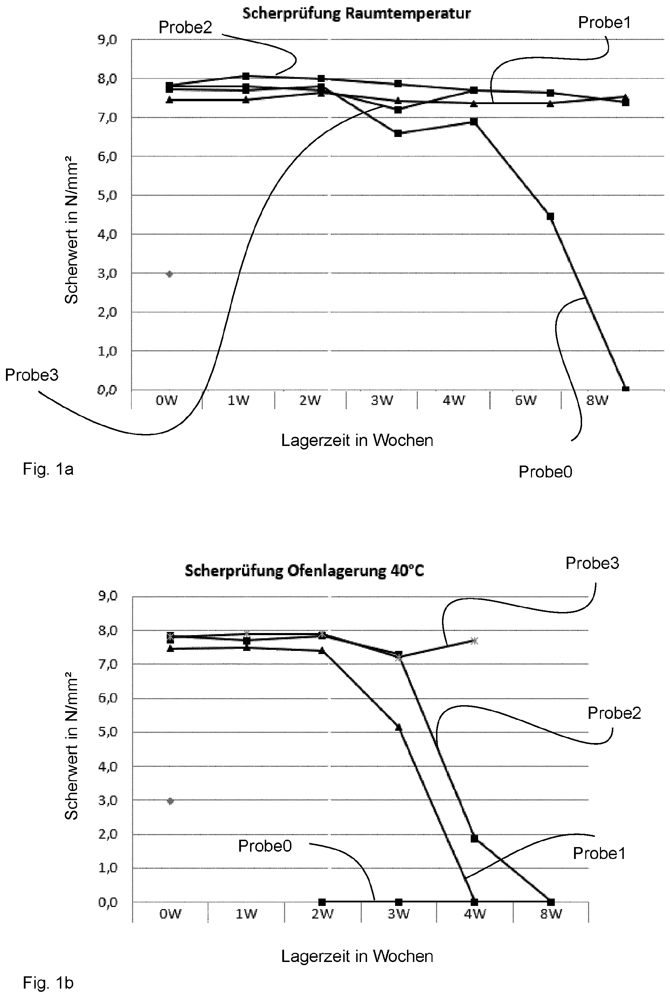

Jeweils zwei Proben gleicher Art wurden mit einer Plattenpresse mit 200 mm x 200 mm Plattenfläche mit einem Flächendruck von 3 N/mm² verklebt, wobei die Aktivierung des Klebers in einem Ofen mittels Erwärmens auf 120 °C und Halten bei 120 °C für 30 Minuten erfolgte. Anschließend wurden 8 Proben in einen Ofen gelegt und dort bei 40 °C gelagert. Nach jeder vergangenen Woche wurde eine Probe entnommen und es wurde eine Scherwertprüfung (in Anlehnung an DIN EN 1465) durchgeführt. Außerdem wurde jede Woche eine Scherwertprüfung von bei Raumtemperatur gelagerten Proben durchgeführt. Die Ergebnisse der Prüfung sind in Figs. 1a und 1b dargestellt.

Den Ergebnissen ist zu entnehmen, dass bei Raumtemperatur die erfindungsgemäß verwendete Zusammensetzung bessere Scherwerte aufweist als die Referenzproben Probe0, Probe1 und Probe2. Die nach sechs Wochen geprüfte Probe0 wies einen deutlich reduzierten Scherwert auf, nach 8 Wochen wies Probe 0 einen Scherwert von 0 auf.

Die Lagerung bei 40 Grad Celsius führt bei der Referenzprobe Probe0 spätestens nach einer Woche zu einem Scherwert von 0, die Probe weist also keine Lagerstabilität bei 40 Grad Celsius auf. Die Probe1 und Probe2 wiesen nach 2 Wochen einen nahezu unverändert guten Scherwert von über 7,0 N/mm² auf, begannen aber ab drei Wochen Lagerung, merklich zu degradieren.

In allen Fällen ist der Scherwert der Probe2 mit beidseitig beschichteter Oberfläche höher als der Scherwert der Probe1 mit einseitig beschichteter Oberfläche.

Insbesondere ist zu erkennen, dass Probe3 die beste Lagerstabilität aufweist mit nach 4 Wochen bei 40 Grad Celsius Lagerung nahezu unverändert gutem Scherwert. Als einzige Probe konnte ein Platinen-Sandwich erhalten werden, das auch nach vierwöchiger Lagerung bei 40 Grad Celsius noch einen unverändert guten Scherwert aufwies. Zum Anmeldezeitpunkt dauerten die Versuche noch an.

Es wurden außerdem Versuche durchgeführt an den fertigen Sandwiches, sie wurden auf Prüftemperaturen erwärmt, hiernach nach kurzem Halten unter Wärme ebenfalls einem Scherwerttest unterzogen.

| **Probennummer** | **Probe 2** | | **Probe3** | |
|---|---|---|---|---|
| | | | | |
| | | | | |
| | | | | |
| | | | | |

| **Scherwerte [N/mm²]** | | | | |
|---|---|---|---|---|
| jeweils Mittelwert aus 3-fach Prüfung | [N/mm²] | Standardabw. | [N/mm²] | Standardabw. |
| RT | 5,55 | 0,88 | 6,01 | 0,26 |
| 50°C | 5,08 | 1,32 | 5,85 | 0,11 |
| 100°C | 5,38 | 0,27 | 5,59 | 0,12 |
| 150°C | 4,89 | 0,42 | 5,22 | 0,08 |
| 200°C | 4,66 | 0,46 | 4,96 | 0,04 |

Die Ergebnisse zeigen, dass sowohl die Probe2 als auch die Probe3 über einen gewissen Zeitraum auch hohe Temperaturen von bis zu 200 °C aushalten können, ohne ihre mechanische Stabilität zu verlieren. Insbesondere zeigt sich aber, dass die Scherwerte der Probe3 signifikant höher sind als diejenigen der Vergleichsprobe Probe2.

Probe0 wurde als Referenz der Temperaturprüfung unterzogen, es wurde gezeigt, dass nach einem Erwärmen auf 150 °C ein Scherwert von etwa 0,90 N/mm² erhalten wurde. Es zeigte sich somit unter Zugrundelegung der Probe3, dass die erfindungsgemäßen Bleche gegenüber bereits bekannten Blechen zur Herstellung von temperaturstabileren Blechpaketen geeignet sind.

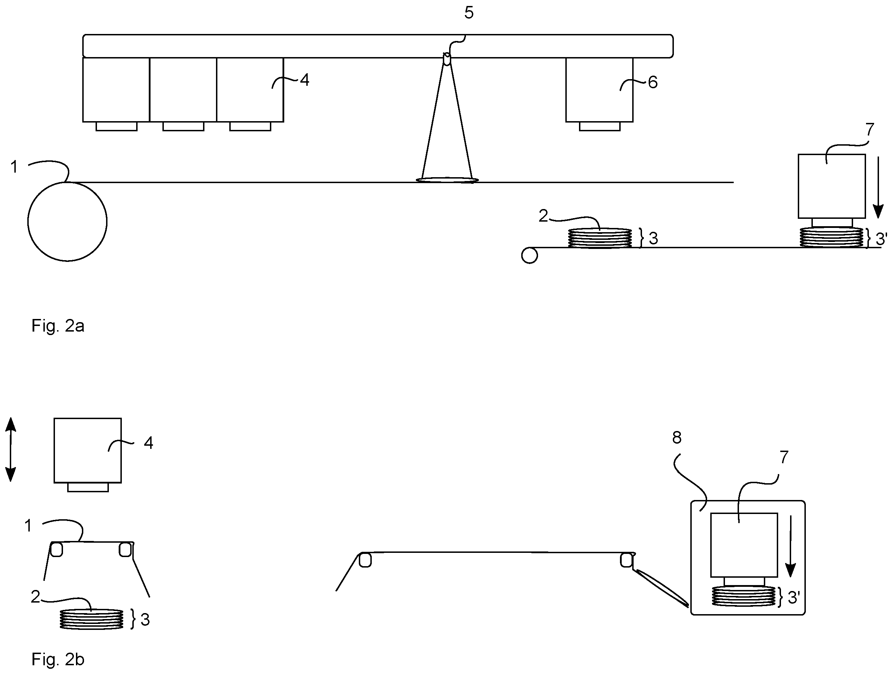

Ein Beispiel für eine erste Ausführung des Verfahrens zum Herstellen eines Blechpakets für einen Elektromotor ist in Fig. 2a dargestellt. Es wird ein bereits mit einem Kunststoff beschichtetes Blech bereitgestellt, und zwar als nicht kornorientiertes Elektroband 1. Dieses wird in eine Inline-Anlage hineintransportiert. In einer ersten Station sorgt eine Anzahl von Auspressstempel 4 für ein Auspressen von Formteilen 2, die als Rotorlamelle oder als Statorlamelle ausgebildet sind. In einer nachfolgenden Station wird das Formteil mittels eines als NIR-Emitter ausgebildeten Mittels zur Ausgabe von Infrarotstrahlung 5 beleuchtet, durch die dadurch herbeigeführte Erwärmung wird die Klebstoffbeschichtung des Formteils aktiviert. Das Formteil wird anschließend mit dem Auspressstempel 6 ausgepresst und in einem Positionierbereich zu einem Stapel 3 position- und/oder winkelausgerichtet gesammelt. Abschließend erfolgt in einer Verdichtungsstation ein Verdichten mit einem Verdichterstempel 7, bis der Klebstoff ausgehärtet ist und das fertige Blechpaket entnommen werden kann.

Fig. 2b ist ein Fertigungsverfahren zu entnehmen, welches dem bekannten Backlackverfahren ähnlich ist. Das Verfahren der Fig. 2b unterscheidet sich von dem Verfahren der Fig. 2a insbesondere dahingehend, dass das Auspressen der Formteile 2 und das Bilden des Stapels 3 vor der Aktivierung der Klebstoffbeschichtung erfolgt. Eine Aktivierung des Klebers erfolgt erst abschließend in einem Ofen 8, beispielsweise bei einer Temperatur zwischen 100 und 200 Grad Celsius, bei gleichzeitigem Verdichten der Probe mittels Stempels 7.

## Patentansprüche

1. Blech für die Herstellung eines Statorpakets oder eines Rotorpakets,
wobei das Blech mit einer Klebstoffbeschichtung eines thermisch aktivierbaren Klebstoffs beschichtet ist,
wobei der Klebstoff enthält:
60 Gewichtsteile eines Epoxidharzes in Festharzform,
0,5 bis 15 Gewichtsteile eines latenten Härters,
1 bis 15 Gewichtsteile eines latenten Beschleunigers,
wobei der latente Beschleuniger ein Harnstoffderivat enthält,
**dadurch gekennzeichnet, dass**
das Harnstoffderivat 4,4'-Methylen-bis-(Phenyldimethylharnstoff) ist.

2. Blech nach Anspruch 1, **dadurch gekennzeichnet, dass** der Klebstoff enthält:
1 bis 10 Gewichtsteile eines latenten Härters, bevorzugt 2 bis 5 Gewichtsteile eines latenten Härters.

3. Blech nach einem der vorhergehenden Ansprüche, **dadurch gekennzeichnet, dass** das Epoxidharz Bisphenol A-Epoxidharz ist.

4. Blech nach einem der vorhergehenden Ansprüche, **dadurch gekennzeichnet, dass** der latente Härter ein Dicyandiamid, ein Imidazol, einen BF3-Aminkomplex oder eine Kombination derselben enthält.

5. Blech nach einem der vorhergehenden Ansprüche, **dadurch gekennzeichnet, dass** der Klebstoff enthält:
1 bis 10 Gewichtsteile eines latenten Beschleunigers, bevorzugt 1 bis 5 Gewichtsteile eines latenten Beschleunigers, besonders bevorzugt 2 bis 5 Gewichtsteile eines latenten Beschleunigers.

6. Blech nach einem der vorhergehenden Ansprüche, **dadurch gekennzeichnet, dass** der Klebstoff weiterhin 0,2 bis 8 Gewichtsteile Absorptionsadditive aufweist, ausgewählt aus der Gruppe der Flammruße und/oder aus der Gruppe der wasserlöslichen Farbstoffe.

7. Blech nach einem der vorhergehenden Ansprüche, **dadurch gekennzeichnet, dass** die Partikel des Harnstoffderivats eine mittlere Teilchengröße zwischen 1 µm und 30 µm aufweisen.

8. Blech nach einem der vorhergehenden Ansprüche, **dadurch gekennzeichnet, dass** die Klebstoffbeschichtung beidseitig auf dem Blech aufgebracht ist und insgesamt zwischen 1 µm und 20 µm dick ist.

9. Blech nach einem der vorhergehenden Ansprüche, **dadurch gekennzeichnet, dass** die Klebstoffbeschichtung insgesamt zwischen 2 µm und 8 µm, bevorzugt insgesamt zwischen 4 µm und 6 µm, dick ist.

10. Blech nach einem der vorhergehenden Ansprüche, **dadurch gekennzeichnet, dass** die Klebstoffbeschichtung aus einer ersten Teilbeschichtung der ersten Blechoberfläche mit einer ersten Dicke und einer zweiten Teilbeschichtung der zweiten Blechoberfläche mit einer zweiten Dicke besteht, wobei die erste Dicke wenigstens das 1,5-fache, bevorzugt das 2-fache, der zweiten Dicke beträgt.

11. Blech nach einem der vorangehenden Ansprüche, **dadurch gekennzeichnet, dass** zwischen Blech und Klebstoffschicht eine Isolierlackschicht angeordnet ist und/oder auf der Klebstoffschicht gegenüberliegenden Seite nur Isolierlack angeordnet ist.

12. Blech nach einem der vorhergehenden Ansprüche, **dadurch gekennzeichnet, dass** das Blech ein Elektroband, insbesondere ein nicht kornorientiertes Elektroband, ist oder aus einem nicht kornorientierten Elektroband abgetrennt wurde.

13. Blech nach Anspruch 12, neben Fe und unvermeidbaren Verunreinigungen bestehend aus:
0,1 bis 3,50 Si,
0,01 bis 1,60 Al,
0,07 bis 0,65 Mn,
optional bis zu 0,25 P, wobei alle Angaben in Gew.-% sind; bevorzugt, neben Fe und unvermeidbaren Verunreinigungen bestehend aus:
2,3 bis 3,40 Si,
0,3 bis 1,1 Al,
0,07 bis 0,250 Mn,
optional bis zu 0,030 P, wobei alle Angaben in Gew.-% sind.

14. Blech nach einem der vorhergehenden Ansprüche, **dadurch gekennzeichnet, dass** das Blech ein weichmagnetischer, metallischer Werkstoff ist, beispielsweise
neben Fe und unvermeidbaren
Verunreinigungen bestehend aus:
0,1 bis 4,0 Si,
0,01 bis 2,60 Al,
0,07 bis 3,0 Mn,
optional bis zu 0,5 P,
optional bis zu 0,015 B,
optional bis zu 0,2 Sb,
optional bis zu 0,01 Zn,
optional bis zu 5 Cr,
optional bis zu 5 Ni,
optional bis zu 0,25 V,
optional bis zu 0,5 Sn,
optional bis zu 0,01 As,
optional bis zu 0,3 Nb,
optional bis zu 0,5 W,
optional bis zu 0,85 Zr,
optional bis zu 0,2 Mo,
optional bis zu 1,0 Cu,
optional bis zu 0,5 Ti,
optional bis zu 0,5 C,
optional bis zu 0,01 Ce,
wobei alle Angaben in Gew.-% sind.

15. Blech nach einem der Ansprüche 12 bis 14,
eine Dicke zwischen 0,05 mm und 2,5 mm, bevorzugt zwischen 0,15 mm und 0,4 mm, zuzüglich Klebstoffbeschichtung aufweisend.

16. Blech nach einem der Ansprüche 13 bis 15, wobei das Blech ein Sandwich oder ein ein- oder beiseitig mit einer akustisch dämpfenden Funktionslage beschichtetes Blech ist.

17. Verfahren zum Herstellen eines Blechpakets für eine elektrische Maschine, wobei das Blechpaket entweder ein Stator-Paket oder ein Rotor-Paket ist, aufweisend die folgenden Schritte:
A) Bereitstellen eines mit einer Klebstoffbeschichtung versehenen Blechs oder mehrerer mit einer Klebstoffbeschichtung versehener Bleche nach einem der Ansprüche 1 bis 16,
B) Transportieren des Blechs in eine Inline-Anlage, aufweisend: ein Stanzwerkzeug, Mittel zur Ausgabe von Infrarotstrahlung sowie einen Auspresstempel,
C) Stanzen eines als Statorlamelle oder als Rotorlamelle ausgebildeten Formteils aus dem in Schritt A bereitgestellten Blech mit dem Stanzwerkzeug,
D) Beleuchten der Klebstoffbeschichtung des in Schritt C ausgebildeten Formteils mit Infrarotstrahlung mittels des Mittels zur Ausgabe von Infrarotstrahlung zum Aktivieren der Klebstoffbeschichtung des Formteils,
E) Auspressen des Formteils mit dem Auspressstempel, position- und/oder winkelausgerichtetes Positionieren des Formteils in einem Positionierbereich,
F) Wiederholen der Schritte C) bis E) bis zum Erreichen einer gewünschten Anzahl von Formteilen in dem Positionierbereich.

18. Verfahren nach Anspruch 17, **dadurch gekennzeichnet, dass** das Herstellen des Blechpakets in einem Inline-Prozess stattfindet, wobei das Stanzwerkzeug und der Auspressstempel Bestandteil einer selben Presse sind.

19. Verfahren nach Anspruch 17 oder nach Anspruch 18, **dadurch gekennzeichnet, dass** die Mittel zur Ausgabe von Infrarotstrahlung zwischen dem Stanzwerkzeug und dem Auspressstempel angeordnet sind und aufweisen:
- mindestens ein oberes Leuchtmittel, das in eine Stanzrichtung auf eine erste Formteiloberfläche gerichtet ist oder
- mindestens ein unteres Leuchtmittel, das gegen eine Stanzrichtung auf eine jenseits des Stanzwerkzeugs vorhandene zweite Formteiloberfläche gerichtet ist oder
- sowohl mindestens ein oberes als auch mindestens ein unteres Leuchtmittel.

20. Verfahren nach einem der Ansprüche 17 bis 19, **dadurch gekennzeichnet, dass** nach Positionieren des letzten Formteils der gewünschten Anzahl von Formteilen das erhaltene Blechpaket mittels eines dem Schritt F nachgelagerten Verdichtungsschritts mit einem stirnseitig gleichmäßigen Flächendruck komprimiert wird.

21. Verfahren nach einem der Ansprüche 17 bis 20, **dadurch gekennzeichnet, dass** die Schritte C bis E mit einer Hubzahl von wenigstens 80/min, bevorzugt zwischen 120/min und 300/min, durchgeführt wird.

22. Verfahren zum Herstellen eines Blechpakets für eine elektrische Maschine, wobei das Blechpaket bevorzugt entweder ein Stator-Paket oder ein Rotor-Paket ist, aufweisend die folgenden Schritte:
A) Bereitstellen eines mit einer Klebstoffbeschichtung versehenen Blechs oder mehrerer mit einer Klebstoffbeschichtung versehener Bleche nach einem der Ansprüche 1 bis 16,
B) Stanzen einer Anzahl von Lamellen, insbesondere als Statorlamelle oder als Rotorlamelle ausgebildeten Formteile, aus dem in Schritt A bereitgestellten Blech mit dem Stanzwerkzeug,
C) position- und/oder winkelausgerichtetes Übereinanderpositionieren der Formteile,
D) Pressen der übereinanderpositionierten Formteile,
E) Erwärmen der übereinanderpositionierten Formteile für einen vorgegebenen Zeitraum bei einer vorgegebenen Temperatur,
F) optional nach Positionieren des letzten Formteils der gewünschten Anzahl von Formteilen Komprimieren der erhaltenen Komponente mittels eines dem Schritt E nachgelagerten Verdichtungsschritts mit einem stirnseitig gleichmäßigen Flächendruck in eine zur Formteiloberfläche senkrechte Richtung.

23. Verfahren nach Anspruch 22, wobei der vorgegebene Zeitraum zwischen 10 min und 60 min, bevorzugt zwischen 10 und 40 min, beträgt.

24. Verfahren nach Anspruch 22 oder nach Anspruch 23, wobei die vorgegebene Temperatur zwischen 100 °C und 200 °C, bevorzugt zwischen 100 °C und 150 °C beträgt.

25. Blechpaket für eine elektrische Maschine, hergestellt mit einem Verfahren nach einem der Ansprüche 17 bis 24.

26. Blechpaket nach Anspruch 25, ausgebildet als Stator oder als Rotor.

27. Elektrische Maschine, insbesondere Elektromotor, aufweisend einen Stator und/oder einen Rotor nach Anspruch 26.

28. Elektrische Maschine nach Anspruch 27, ausgebildet als Elektromotor für einen Personenkraftwagen, einen Lastkraftwagen, ein motorisiertes Zweirad, ein Elektrokleinfahrzeug, ein Flugzeug oder eine Drohne.

29. Elektrische Maschine aufweisend Blechpakete nach Anspruch 25.

## Claims

1. Metal sheet for producing a stator assembly or a rotor assembly,
wherein the sheet is coated with an adhesive coating of a thermally activated adhesive,
wherein the adhesive contains:
60 parts by weight of an epoxy resin in solid resin form,
0.5 to 15 parts by weight of a latent curing agent,
1 to 15 parts by weight of a latent accelerator, wherein the latent accelerator contains a urea derivative,
**characterized in that** the urea derivative is 4,4'methylene bis-(phenyldimethyl urea).

2. Metal sheet according to Claim 1, **characterized in that** the adhesive contains:
1 to 10 parts by weight of a latent curing agent, preferably 2 to 5 parts by weight of a latent curing agent.

3. Metal sheet according to one of the preceding claims, **characterized in that** the epoxy resin bisphenol A epoxy resin.

4. Metal sheet according to any one of the preceding claims, **characterized in that** the latent curing agent contains a dicyandiamide, an imidazole, a BF3 amine complex or a combination thereof.

5. Metal sheet according to any one of the preceding claims, **characterized in that** the adhesive contains:
1 to 10 parts by weight of a latent accelerator, preferably 1 to 5 parts by weight of a latent accelerator, particularly preferably 2 to 5 parts by weight of a latent accelerator.

6. Metal sheet according to any one of the preceding claims, **characterized in that** the adhesive further contains 0.2 to 8 parts by weight absorption additives, selected from the group of lamp blacks and/or from the group of water-soluble dyes.

7. Metal sheet according to any one of the preceding claims, **characterized in that** the particles of the urea derivative have an average particle size between 1 µm and 30 µm.

8. Metal sheet according to any one of the preceding claims, **characterized in that** the adhesive coating is applied to both sides of the sheet and is between 1 µm and 20 µm thick in total.

9. Metal sheet according to any one of the preceding claims, **characterized in that** the adhesive coating is between 2 µm and 8 µm thick in total, preferably between 4 µm and 6 µm thick in total.

10. Metal sheet according to any one of the preceding claims, **characterized in that** the adhesive coating consists of a first partial coating of the first sheet surface having a first thickness and a second partial coating of the second sheet surface having a second thickness, wherein the first thickness is at least 1.5 times as thick, preferably twice as thick as the second thickness.

11. Metal sheet according to any one of the preceding claims, **characterized in that** an insulating varnish layer is arranged between sheet and adhesive layer, and/or only insulating varnish is arranged on the side opposite the adhesive layer.

12. Metal sheet according to any one of the preceding claims, **characterized in that** the sheet is an electrical steel strip, in particular a non-grain oriented electrical steel strip, or has been separated from a non-grain oriented electrical steel strip.

13. Metal sheet according to Claim 12, consisting of, besides Fe and unavoidable impurities:
0.1 to 3.50 Si,
0.01 to 1.60 Al,
0.07 to 0.65 Mn,
optionally up to 0.25 P, wherein all values represent percent by weight;
preferably consisting of, besides Fe and unavoidable impurities:
2.3 to 3.40 Si,
0.3 to 1.1 Al,
0.07 to 0.250 Mn,
optionally up to 0.030 P, wherein all values represent percent by weight.

14. Metal sheet according to any one of the preceding claims, **characterized in that** the sheet is a soft magnetic, metallic material, for example consisting of, besides Fe and unavoidable impurities:
0.1 to 4.0 Si,
0.01 to 2.60 Al,
0.07 to 3.0 Mn,
optionally up to 0.5 P,
optionally up to 0.015 B,
optionally up to 0.2 Sb,
optionally up to 0.01 Zn,
optionally up to 5 Cr,
optionally up to 5 Ni,
optionally up to 0.25 V,
optionally up to 0.5 Sn,
optionally up to 0.01 As,
optionally up to 0.3 Nb,
optionally up to 0.5 W,
optionally up to 0.85 Zr,
optionally up to 0.2 Mo,
optionally up to 1.0 Cu,
optionally up to 0.5 Ti,
optionally up to 0.5 C,
optionally up to 0.01 Ce,
wherein all values represent percent by weight.

15. Metal sheet according to any one of Claims 12 to 14,
having a thickness between 0.05 mm and 2.5 mm, preferably between 0.15 mm and 0.4 mm plus adhesive coating.

16. Metal sheet according to any one of Claims 13 to 15, wherein the sheet is a sandwich or a sheet coated on one or both sides with an acoustically damping functional layer.

17. Method for producing a laminated core for an electric machine, wherein the laminated core is either a stator assembly or a rotor assembly, including the following steps:
A) providing a metal sheet furnished with an adhesive coating or a plurality of metal sheets furnished with an adhesive coating according to any one of Claims 1 to 16,
B) transporting the sheet into an inline system, including: a stamping tool, means for emitting infrared radiation and an ejector punch,
C) stamping a moulded part designed as a stator lamella or rotor lamella out of the sheet metal provided in step A with the stamping tool,
D) illuminating the adhesive coating of the moulded part formed in step C with infrared radiation via the means for emitting infrared radiation to activate the adhesive coating of the moulded part,
E) extruding the moulded part with the ejector punch, positioning the moulded part in positionally aligned and/or angularly aligned manner in a positioning region,
F) repeating steps C) to E) until a desired number of moulded parts has been reached in the positioning region.

18. Method according to Claim 17, **characterized in that** the production of the laminated core takes place in an inline process, wherein the stamping tool and the ejector punch are components of the same press.

19. Method according to Claim 17 or according to Claim 18, **characterized in that** the means for emitting infrared radiation are arranged between the stamping tool and the ejector punch, and include:
- at least one upper lamp, which is directed towards a first moulded part surface in a stamping direction, or
- at least one lower lamp, which is directed towards a second moulded part surface present beyond the stamping tool in the opposite direction to the stamping direction, or
- both at least one upper and at least one lower lamp.

20. Method according to any one of Claims 17 to 19, **characterized in that**, in a compression step downstream of step F, after the last moulded part of the desired number of moulded parts has been positioned, the laminated core obtained is compressed with a contact pressure applied evenly over the frontal face.

21. Method according to any one of Claims 17 to 20, **characterized in that** steps C to E are performed with a stroke rate of at least 80/min, preferably between 120/min and 300/min.

22. Method for producing a laminated core for an electric machine, wherein the laminated core is preferably either a stator assembly or a rotor assembly, including the following steps:
A) providing a metal sheet furnished with an adhesive coating or a plurality of metal sheets furnished with an adhesive coating according to any one of Claims 1 to 16,
B) stamping out a number of lamellae with the stamping tool, in particular as moulded parts in the form of stator lamellae or rotor lamellae, from the metal sheet provided in step A,
C) positioning the moulded parts one on top of the other in positionally aligned and/or angularly aligned manner,
D) pressing the superposed moulded parts,
E) heating the superposed moulded parts for a predetermined period of time at a predetermined temperature,
F) optionally in a compressing step downstream of step E, after positioning the last moulded part of the desired number of moulded parts, compressing the component obtained with a contact pressure applied evenly over the frontal face in a direction perpendicular to the surface of the moulded part.

23. Method according to Claim 22, wherein the predetermined period of time is between 10 min and 60 min, preferably between 10 and 40 min.

24. Method according to Claim 22 or according to Claim 23, wherein the predetermined temperature is between 100°C and 200°C, preferably between 100°C and 150°C.

25. Laminated core for an electric machine, produced with a method according to any one of Claims 17 to 24.

26. Laminated core according to Claim 25, embodied as a stator or a rotor.

27. Electric machine, in particular an electric motor, including a stator and/or a rotor according to Claim 26.

28. Electric machine according to Claim 27, embodied as an electric motor for a motor car, a lorry, a motorised bicycle, a neighbourhood electric vehicle, an aircraft or a drone.

29. Electric machine having laminated cores according to Claim 25.

## Revendications

1. Tôle, destinée à la fabrication d'un empilement de stator ou d'un empilement de rotor,
la tôle étant revêtue d'un revêtement d'agent adhésif en un agent adhésif thermoactivable,
l'agent adhésif contenant :
60 parts en poids d'une résine époxy sous la forme d'une résine solide,
de 0,5 à 15 parts en poids d'un agent durcisseur latent,
de 1 à 15 parts en poids d'un agent accélérateur latent, l'agent accélérateur latent contenant un dérivé de l'urée,
**caractérisée en ce que** le dérivé de l'urée est une 4,4'-méthylènebis(phényldiméthylurée).

2. Tôle selon la revendication 1, **caractérisée en ce que** l'agent adhésif contient :
de 1 à 10 parts en poids d'un agent durcisseur latent, de manière préférentielle, de 2 à 5 parts en poids d'un agent durcisseur latent.

3. Tôle selon l'une quelconque des revendications précédentes, **caractérisée en ce que** la résine époxy est une résine époxy de bisphénol-A.

4. Tôle selon l'une quelconque des revendications précédentes, **caractérisée en ce que** l'agent durcisseur latent contient un dicyandiamide, un imidazole, un complexe d'amine BF3 ou une association de ces derniers.

5. Tôle selon l'une quelconque des revendications précédentes, **caractérisée en ce que** l'agent adhésif contient :
de 1 à 10 parts en poids d'un agent accélérateur latent, de manière préférentielle, de 1 à 5 parts en poids d'un agent accélérateur latent, de manière particulièrement préférentielle, de 2 à 5 parts en poids d'un agent accélérateur latent.

6. Tôle selon l'une quelconque des revendications précédentes, **caractérisée en ce que** l'agent adhésif comporte par ailleurs de 0,2 à 8 parts en poids d'additifs absorbants, sélectionnés dans le groupe des noirs de fumée et / ou dans le groupe des colorants hydrosolubles.

7. Tôle selon l'une quelconque des revendications précédentes, **caractérisée en ce que** le particules du dérivé de l'urée présentent une taille moyenne des particules comprise entre 1 µm et 30 µm.

8. Tôle selon l'une quelconque des revendications précédentes, **caractérisée en ce que** le revêtement d'agent adhésif est appliqué sur les deux faces de la tôle et est d'une épaisseur comprise au total entre 1 µm et 20 µm.

9. Tôle selon l'une quelconque des revendications précédentes, **caractérisée en ce que** le revêtement d'agent adhésif est d'une épaisseur comprise au total entre 2 µm et 8 µm, de manière préférentielle, comprise au total entre 4 µm et 6 µm.

10. Tôle selon l'une quelconque des revendications précédentes, **caractérisée en ce que** le revêtement d'agent adhésif est constitué d'un revêtement partiel de la première surface de la tôle avec une première épaisseur et d'un revêtement partiel de la deuxième surface de la tôle avec une deuxième épaisseur, la première épaisseur s'élevant à au moins 1,5 fois, de manière préférentielle, à au moins 2 fois la deuxième épaisseur.

11. Tôle selon l'une quelconque des revendications précédentes, **caractérisée en ce qu'**entre la tôle et la couche d'agent adhésif est placée une couche de vernis isolant et / ou sur la face opposée à la couche d'agent adhésif n'est placé que du vernis isolant.

12. Tôle selon l'une quelconque des revendications précédentes, **caractérisée en ce que** la tôle est un acier magnétique, notamment un acier magnétique à grains non orientés ou a été sectionnée à partir d'un acier magnétique à grains non orientés.

13. Tôle selon la revendication 12, hormis de Fe et d'impuretés inévitables, constituée de :
0,1 à 3,50 de Si,
0,01 à 1,60 d'Al,
0,07 à 0,65 de Mn,
en option, de jusqu'à 0,25 de P, toutes les mentions étant exprimées en % en poids ;
de manière préférentielle, hormis de Fe et d'impuretés inévitables, constituée de :
2,3 à 3,40 de Si,
0,3 à 1,1 d'Al,
0,07 à 0,250 Mn,
en option, de jusqu'à 0,030 de P, toutes les mentions étant exprimées en % en poids.

14. Tôle selon l'une quelconque des revendications précédentes, **caractérisée en ce que** la tôle est une matière métallique magnétique douce, par exemple, hormis de Fe et d'impuretés inévitables, constituée de :
0,1 à 4,0 de Si,
0,01 à 2,60 d'Al,
0,07 à 3,0 de Mn,
en option de jusqu'à 0,5 de P,
en option de jusqu'à 0,015 de B,
en option de jusqu'à 0,2 de Sb,
en option de jusqu'à 0,01 de Zn,
en option de jusqu'à 5 de Cr,
en option de jusqu'à 5 de Ni,
en option de jusqu'à 0,25 de V,
en option de jusqu'à 0,5 de Sn,
en option de jusqu'à 0,01 As,
en option de jusqu'à 0,3 de Nb,
en option de jusqu'à 0,5 de W,
en option de jusqu'à 0,85 de Zr,
en option de jusqu'à 0,2 de Mo,
en option de jusqu'à 1,0 de Cu,
en option de jusqu'à 0,5 de Ti,
en option de jusqu'à 0,5 de C,
en option de jusqu'à 0,01 de Ce,
toutes les mentions étant exprimées en % en poids.

15. Tôle selon l'une quelconque des revendications 12 à 14,
présentant une épaisseur comprise entre 0,05 mm et 2,5 mm, de manière préférentielle, comprise entre 0,15 mm et 0,4 mm, majorée du revêtement d'agent adhésif.

16. Tôle selon l'une quelconque des revendications 13 à 15, la tôle étant un sandwich ou une tôle revêtue sur une ou sur les deux faces d'une couche fonctionnelle insonorisante.

17. Procédé, destiné à fabriquer un empilement de tôles pour une machine électrique, l'empilement de tôles étant soit un empilement de stator ou un empilement de rotor, comportant les étapes suivantes, consistant à :
A) mettre à disposition une tôle dotée d'un revêtement d'agent adhésif ou plusieurs tôles dotées d'un revêtement d'agent adhésif selon l'une quelconque des revendications 1 à 16,
B) transporter la tôle dans une installation en ligne, comportant : un outil de découpe, des moyens d'émission d'un rayonnement infrarouge, ainsi qu'un poinçon de pressage,
C) avec l'outil de découpe, découper dans la tôle mise à disposition à l'étape A une pièce découpée conçue sous la forme d'une lamelle de stator ou d'une lamelle de rotor,
D) à l'aide du moyen d'émission d'un rayonnement infrarouge, irradier avec un rayonnement infrarouge le revêtement d'agent adhésif de la pièce découpée conçue à l'étape C, pour activer le revêtement d'agent adhésif de la pièce découpée,
E) avec le poinçon de pressage, presser la pièce découpée, positionner en position et / ou en angle orienté(e) la pièce découpée dans une zone de positionnement,
F) réitérer les étapes C) à E) jusqu'à l'obtention d'un nombre souhaité de pièces découpées dans la zone de positionnement.

18. Procédé selon la revendication 17, **caractérisé en ce que** la fabrication de l'empilement de tôles est effectuée dans un processus en ligne, l'outil de découpe et le poinçon de pressage étant des parties intégrantes d'une même presse.

19. Procédé selon la revendication 17 ou selon la revendication 18, **caractérisé en ce que** les moyens d'émission d'un rayonnement infrarouge sont placés entre l'outil de découpe et le poinçon de pressage et comportent :
- au moins une source lumineuse supérieure, qui est orientée dans une direction de découpe sur une première surface de la pièce découpée ou
- au moins une source lumineuse inférieure, qui est orientée à l'encontre d'une direction de découpe sur une deuxième surface de la pièce découpée, présente au-delà de l'outil de découpe ou
- aussi bien au moins une source lumineuse supérieure qu'également au moins une source lumineuse inférieure.

20. Procédé selon l'une quelconque des revendications 17 à 19, **caractérisé en ce qu'**après le positionnement de la dernière pièce découpée du nombre souhaité de pièces découpées, à l'aide d'une étape de compression, située en aval de l'étape F, l'on comprime à une pression superficielle régulière en face frontale l'empilement de tôles obtenu.

21. Procédé selon l'une quelconque des revendications 17 à 20, **caractérisé en ce que** l'on réalise les étapes C à E avec un nombre de courses d'au moins 80 / minute, de manière préférentielle, compris entre 120 / minute et 300 / minute.

22. Procédé, destiné à fabriquer un empilement de tôles pour une machine électrique, l'empilement de tôles étant de manière préférentielle, soit un empilement de stator ou un empilement de rotor, comportant les étapes suivantes, consistant à :
A) mettre à disposition une tôle dotée d'un revêtement d'agent adhésif ou plusieurs tôles dotées d'un revêtement d'agent adhésif selon l'une quelconque des revendications 1 à 16,
B) avec l'outil de découpe, découper dans la tôle mise à disposition à l'étape A une pièce découpée conçue sous la forme d'une lamelle de stator ou d'une lamelle de rotor,
C) positionner en superposition, en position et / ou en angle orienté(e) les pièces découpées,
D) presser les pièces découpées positionnées en superposition,
E) faire chauffer les pièces découpées positionnées en superposition sur une période prédéfinie, à une température prédéfinie,
F) en option, après le positionnement de la dernière pièce découpée du nombre souhaité de pièces découpées, à l'aide d'une étape de compression, située en aval de l'étape E, comprimer à une pression régulière sur la face frontale le composant obtenu, dans une direction perpendiculaire à la surface de la pièce découpée.

23. Procédé selon la revendication 22, la période prédéfinie étant comprise entre 10 minutes et 60 minutes, de manière préférentielle, étant comprise entre 10 et 40 minutes.

24. Procédé selon la revendication 22 ou selon la revendication 23, la température prédéfinie étant comprise entre 100 °C et 200 °C, de manière préférentielle, étant comprise entre 100 °C et 150 °C.

25. Empilement de tôles pour une machine électrique, fabriqué avec un procédé selon l'une quelconque des revendications 17 à 24.

26. Empilement de tôles selon la revendication 25, conçu sous la forme d'un stator ou d'un rotor.

27. Machine électrique, notamment moteur électrique, comportant un stator et / ou un rotor selon la revendication 26.

28. Machine électrique selon la revendication 27, conçue sous la forme d'un moteur électrique pour un véhicule particulier, un camion, une bicyclette motorisée, un véhicule électrique de petite taille, un avion ou un drone.

29. Machine électrique, comportant des empilements de tôles selon la revendication 25.
